# EUROPEAN PATENT SPECIFICATION

(11) **EP 1 118 233 B1**
(45) Date of publication and mention of the grant of the patent: **25.04.2007**
(21) Application number: 99970249.1
(22) Date of filing: 01.10.1999
(51) Int. Cl.: H04Q 7/22, H04Q 7/28, H04Q 7/32, H04Q 7/36

(54) **METHOD OF DETERMINING HOME AREA FOR SUBSCRIBER TERMINAL, AN ASSOCIATED RADIO SYSTEM AND A SUBSCRIBER NETWORK ELEMENT**
VERFAHREN ZUR BESTIMMUNG DES KLIMATGEBIETES EINES TEILNEHMERENDGERÄT, EIN ENTSPRECHENDES FUNKSYSTEM SOWIE EIN TEILNEHMERNETZELEMENT
PROCEDE PERMETTANT DE DETERMINER UNE ZONE LOCALE POUR UN TERMINAL D'ABONNE, SYSTEME RADIO ASSOCIE ET ELEMENT DE RESEAU D'ABONNE

(30) Priority: 01.10.1998 FI 982126
(43) Date of publication of application: 25.07.2001
(73) Proprietor: Nokia Corporation, 02150 Espoo (FI)
(72) Inventor: AHOLA, Ossi, FIN-39200 Kyröskoski (FI); PELTOLA, Marjo, FIN-33400 Tampere (FI); SUONVIERI, Jukka, FIN-33610 Tampere (FI); TUSA, Kai, FIN-33950 Pirkkala (FI)
(74) Representative: Holmström, Stefan Mikael
(86) International application number: PCT/FI1999/000813
(87) International publication number: WO 2000/021315

(56) References cited:
- EP-A1- 0 666 700
- WO-A1-97/13387
- WO-A1-99/11085
- WO-A2-98/38819
- US-A- 5 568 153
- US-A- 5 613 205
- US-A- 5 666 662
- US-A- 5 732 354

## Description

The invention relates to determination of a home area in a cellular radio system where the mobility of subscriber terminals can be restricted such that the terminals only operate in radio cells included in the home area assigned to them. The invention relates primarily to a wireless local loop (WLL) system, which utilizes fixed subscriber terminals. Since subscriber terminals in WLL systems are generally installed fixedly in a particular location, it is not usually necessary to provide the terminals with mobility, i.e. ability to set up a data link via any base station in the system. Even if WLL subscriber terminals were terminals in a cellular radio system which also comprises mobile subscriber terminals (which are provided with the aforementioned mobility), it is preferable that the mobility can be eliminated or at least restricted to certain cells for WLL terminals which do not necessarily need free mobility. In such a manner it is possible to reduce the number of location updates and handover operations required, which saves system resources. There is thus a need in WLL systems to determine a home area for each subscriber terminal.

In prior art arrangements a home area is determined for a specific subscriber terminal in such a way that when a subscriber terminal is added to the system, the operator checks for example from a map which radio cell presumably covers best the geographical area where the subscriber terminal will be placed. The operator thereafter determines this radio cell as the home area of the subscriber terminal. The greatest drawback of this known arrangement is that the field strength of a specific radio cell may vary to a great extent from one place to another within the cell, especially in urban areas where buildings interfere with the propagation of signals. This means that the determination of a home area for a particular subscriber terminal can fail if the home area is selected entirely on the basis of the map.

Another alternative manner of determining a home area for a subscriber terminal is naturally that the operator sends a maintenance man to the place of location of the terminal to carry out measurements on the field strength. The actual field strengths of different cells are thus detected at the location of the subscriber terminal. However, in practice it is too slow and expensive to send a maintenance man to the place of location of the subscriber terminal.

Document W0 9838819 A2 (NOKIA TELECOMMUNICATIONS OY) relates to a method of allocating a home cell to a subscriber station of a cellular radio system. When a new user is added to the system, the user is permitted a degree of mobility over nearby cells. Calls by or to the user are monitored and a record is kept of the cells used. The radio cells, the subscriber station has utilized the most, are identified on the basis of the data stored in the record, and one of these cells is allocated as the home cell to the subscriber station.

Document US 5666662 A (T. SHIBUYA) relates to a mobile terminal location determining method used in a mobile radio communication system. The method involves calculating respective distances from base stations receiving location signal to mobile terminal based on respective detected field strength values.

Document US 5732354 A (A.MAC DONALD) relates to a method and apparatus for determining the location of a mobile telephone. Upon initiation of a location function by the mobile switching center, a location estimate of the mobile telephone is calculated by receiving signal strengths between the mobile telephone and a number of antennae. The distances between the mobile telephone and each of another number of antennae are calculated using the signal strength data and en estimated cell propagation characteristic value.

Document US 5613205 E (D. DUFOUR) relates to a method of locating mobile terminal in cellular telecommunications system. The method involves identifying a number of candidate handoff cells having sufficient signal strength to maintain a call with the mobile terminal.

The purpose of the present invention is to solve the aforementioned problem and to provide an arrangement for the determination of a subscriber terminal's home area such that the most suitable home area can be selected for each subscriber terminal in an easy and reliable manner. This objective is achieved with a method according to the invention of determining a home area for a subscriber terminal in a radio system where the subscriber terminal comprises measuring means for measuring the strengths of signals it has received from different base stations and for storing the measurement results in a memory, the method comprising a step of receiving a location updating message from the subscriber terminal. The method according to the invention is characterized in that the method comprises steps of transmitting, after the location updating message has been received, a command to the subscriber terminal to transmit the measurement results it has stored in the memory, receiving the measurement results from the subscriber terminal, identifying the base stations with the greatest signal strengths on the basis of the measurement results, and determining the home area of the subscriber terminal such that it includes at least one of the identified base stations.

The invention also relates to a wireless local loop radio system where the method according to the invention can be applied, the radio system comprising subscriber terminals comprising measuring means for measuring the strengths of signals they have received from different base stations and for storing the measurement results in a memory, and transmitting means for transmitting location updates to other parts of the system, and a subscriber network element which communicates with an exchange and which comprises means for transmitting telecommunication signals between the subscriber terminals and the exchange via the base stations. The system according to the invention is characterized in that the system comprises detection means for detecting a location updating message transmitted by a particular subscriber terminal, transmitting means for transmitting a command to said particular subscriber terminal to transmit the measurement results stored in the memory of the subscriber terminal after the detection means have detected a location updating message transmitted by said subscriber terminal, receiving means for receiving the measurement results transmitted by said subscriber terminal, identification means for identifying the base stations with the strongest signals on the basis of the measurement results received from the subscriber terminal, and means, responsive to the identification means, for determining a home area for said subscriber terminal such that said home area includes at least one of the identified base stations.

The invention further relates to a subscriber network element which can be applied in the system according to the invention, the element comprising means for setting up a communication link to an exchange for transmitting telecommunication signals between subscriber terminals and the exchange, and a register of new subscriber terminals, which stores the identities of the new subscriber terminals. The subscriber network element according to the invention is characterized in that the subscriber network element comprises detection means for detecting a location updating message containing the subscriber identity stored in the register of new subscriber terminals, transmitting means which, after said detection of the location updating message, transmit to the subscriber terminal which transmitted the location updating message a command to transmit the measurement results stored in a memory means of the subscriber terminal to the subscriber network element, receiving means for receiving the measurement results transmitted by said subscriber terminal, identification means for identifying the base stations with the strongest signals on the basis of the measurement results received from the subscriber terminal, and means, responsive to the identification means, for determining a home area for said subscriber terminal such that said home area includes at least one of the identified base stations.

Also, the invention relates to a subscriber terminal of a radio system, which can be applied in the system according to the invention and which comprises transceiver means for setting up a communication link via the radio path to other parts of the system, measuring means for measuring the strengths of signals received from different base stations and for storing them in a memory, and means for transmitting a location updating message to the other parts of the system. The subscriber terminal according to the invention is characterized in that the transceiver means are arranged to transmit the measurement results stored in the memory means to the other parts of the system in response to a predetermined command received by the subscriber terminal.

The basic idea of the invention is that when a home area of a subscriber terminal is determined on the basis of field strength measurements carried out by the subscriber terminal itself, the determination of the home area becomes easier and more accurate. The determination of the home area is thus based on the actual situation at the location where the subscriber terminal will be installed, which means that the field strengths of different radio cells can be taken into account. A home area can also be determined very easily and rapidly when the subscriber terminal is commanded to transmit over the radio path the measurement results of signals it has received from different base stations after the subscriber terminal has transmitted a location update to the network for the first time. Therefore the measurement results transmitted by the subscriber terminal can be used to identify the base station(s) with the greatest field strength in the place of location of the subscriber terminal, whereafter the terminal can be assigned a home area containing at least one of these base stations.

The greatest advantages of the invention are as follows: the determination of a home area is based on the actual situation in the place of installation of the subscriber terminal (and not on a situation assumed to exist only on the basis of the map, for example), the determination of a home area can be activated immediately when the subscriber terminal is switched on in the place of installation, which can be detected when the terminal transmits a location updating message, and reactivation of the subscriber terminal after its location has been changed is rapid since the required manual procedures can be performed in advance such that a location updating message transmitted by the subscriber terminal from the new place of location triggers a chain of events where the system automatically and rapidly determines a new home area for the subscriber terminal, whereafter the terminal operates normally.

The preferred embodiments of the method, system and subscriber terminal according to the invention are disclosed in the appended dependent claims 2 to 4, 6, 7 and 10.

The invention will be described below in greater detail by way of example with reference to the accompanying drawings, in which
Figure 1 is a flowchart of a first preferred embodiment of the method according to the invention,
Figure 2 is a block diagram of a first preferred embodiment of the system according to the invention, and
Figure 3 is a block diagram of a second preferred embodiment of the system according to the invention.

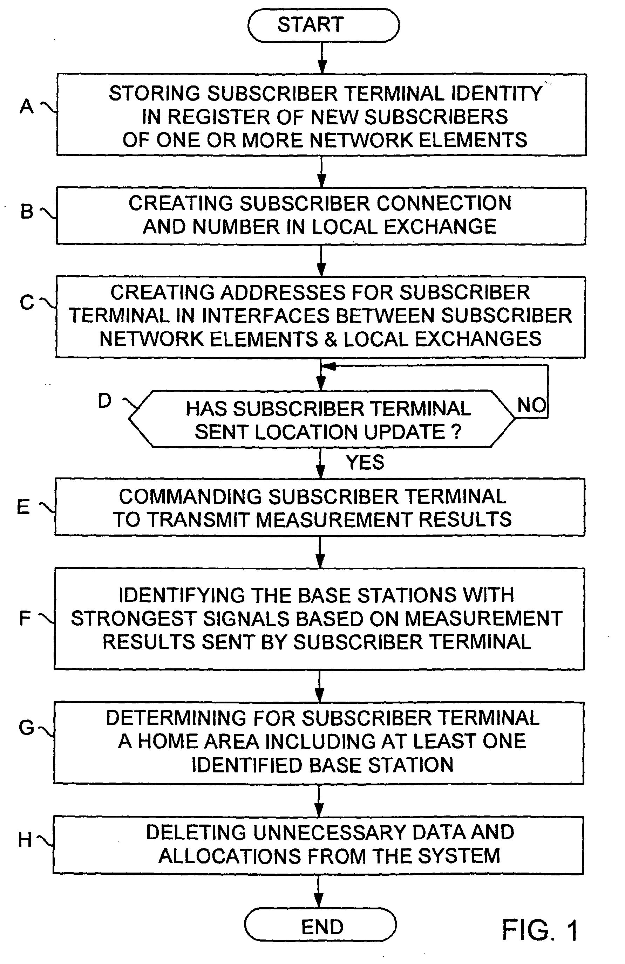

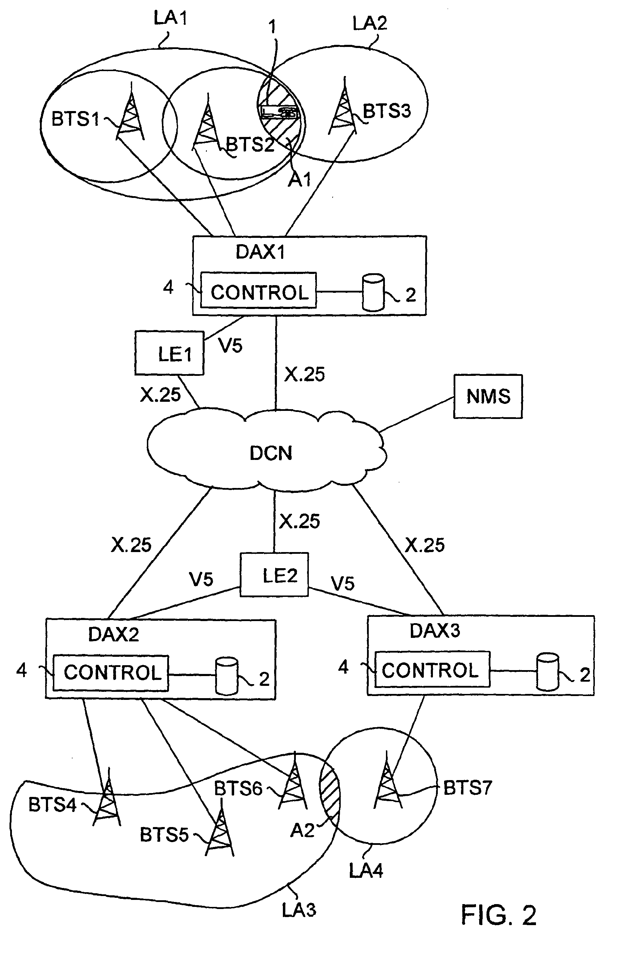

Figure 1 is a flowchart of the first preferred embodiment of the method according to the invention. The flowchart of Figure 1 can be used, for example, in a WLL system shown in Figure 2, where a subscriber network element communicates with a local exchange of a public switched telephone network PSTN.

In block A, the identity of a subscriber terminal is stored in a register of new subscriber terminals of one or more subscriber network elements. The subscriber terminal can be a terminal which will be used for the first time, or alternatively, a terminal which has already been previously assigned a home area but which changes its location so that the home area must be reassigned. The identity of the subscriber terminal is preferably stored in the registers of new subscriber terminals of all the subscriber network elements which are situated near the future place of location of the subscriber terminal, determined on the basis of the map, for example.

In block B, a temporary subscriber connection and subscriber number are activated for the subscriber terminal to each local exchange of the PSTN which is connected to a subscriber network element storing the identity of the subscriber terminal in its register of new subscriber terminals.

Block C comprises a step of creating addresses for the subscriber terminal in the interfaces between the local exchanges and the subscriber network elements.

When the operations shown in blocks A to C have been carried out, the subscriber terminal can be used in the areas of all the subscriber network elements which have the identity of the new subscriber stored in their memory. The process is thereafter on hold until the subscriber terminal transmits a location update.

When a location update has been detected, the process moves from block D to block E where a command is transmitted to the subscriber terminal ordering it to transmit the measurement results. According to the invention, subscriber terminals continuously measure the strengths of the signals they have received from different base stations and store the measurement results in a memory. A subscriber terminal may store in its memory, for example, the data of the five strongest base stations (at least the signal strengths and the identity of the base station or its location area). Therefore data about the strongest base stations in the place of location of the subscriber terminal is always stored in the memory.

The command to transmit the measurement results can be transmitted to the subscriber terminal for example in a short message. The command can be transmitted either immediately after the location update has been received or, alternatively, for example not until the following night (when the network traffic load is low).

Block F comprises receiving the measurements results transmitted by the subscriber terminal for example in a short message. The measurement results are used to identify the base stations (radio cells) with the highest field strength in the place where the subscriber terminal will be installed.

In block G, a home area including at least one of the identified base stations is determined for the subscriber terminal. When the invention is applied for example in a WLL system based on the GSM (Global System for Mobile communications) system, a home area can be determined such that it consists of the location area of the strongest base station. In practice this means that all the base stations that belong to the aforementioned location area also belong to the home area of the subscriber terminal, whereupon the subscriber terminal is able to use all these base stations for communication. The subscriber terminal is thereafter prevented from using other base stations than those which belong to its home area for communication.

In block H, all the unnecessary data is deleted from the system. In other words, after the home area has been determined, the identity of the subscriber terminal can be deleted from the registers of new subscriber terminals of all the subscriber network elements which stored it during the determination process. Correspondingly, the unnecessary subscriber connections and subscriber numbers that were created temporarily can be deleted from the local exchanges, and similarly the unnecessary allocations concerning the subscriber terminal can be deleted from the interfaces between the local exchanges and the subscriber network elements. The data is maintained only in the subscriber network element and the local exchange which control the home area of the subscriber terminal. If the subscriber terminal has changed its home area, also the temporary subscriber number created in the new local exchange is replaced with the earlier subscriber number of the terminal (which is no longer needed in the old local exchange).

The flowchart of Figure 1 is highly advantageous if the location of the subscriber terminal is to be changed in connection with a move, for example. In such a case the steps of blocks A to C can be programmed to the system in advance. When the location of the subscriber terminal changes in connection with a move, the location update detected in block D triggers automatic execution of blocks E to H in the network without any operation being required from the operator. Therefore the subscriber terminal automatically operates in its new place of location and the subscriber does not have to wait for the operator to reprogram the network manually regarding his subscriber terminal. However, it must be noted that if the subscriber terminal changes its location such that the new place of location is situated under the control of the same subscriber network element as the original place of location, the subscriber terminal cannot be switched on in the old place of location after the operations in blocks A to C have been carried out. Otherwise there is a risk that due to the location update originating from the old place of location the network may assume that the subscriber terminal has already changed its location, whereafter the network erroneously determines in blocks E to H the old location of the subscriber terminal as its home area.

Figure 2 is a block diagram of the first preferred embodiment of the system according to the invention. The WLL system shown in Figure 2 comprises three subscriber network elements DAX1 - DAX3, which communicate with a local exchange of the PSTN, i.e. LE1 and LE2, respectively. The interface between the subscriber network elements and the local exchanges can be, for example, a standardized digital V5 interface, such as V5.1 or V5.2, the latter interface also enabling concentration (more subscribers than time slots). In the situation shown in Figure 2, the local exchanges, the subscriber network elements and the network management system NMS are also connected together via a data communication network DCN.

The WLL system shown in Figure 2 can be based on the GSM system, for example. The subscriber network elements DAX1 - DAX3 may be based on mobile services switching centres of the GSM system, and properties that are irrelevant to the WLL system (such as properties related to handover operations which are not needed in the system of Figure 2 since the subscriber terminals are not provided with mobility) have been deleted from the switching centres. The subscriber network elements DAX1 - DAX3 are also programmed to operate together with the local exchanges of the PSTN, such that for example the dialled numbers (in connection with an outgoing call) received from the subscriber terminals are forwarded to the local exchanges for analysis.

Subscriber network element DAX1 is connected in Figure 2 to three base stations BTS1 - BTS3. The base stations are divided into two different location areas such that location area LA1 comprises two base stations BTS1 and BTS2 and location area LA2 comprises one base station. Base stations BTS4 - BTS6 under the control of subscriber network element DAX2 belong to the same location area LA3. Subscriber network element DAX3 controls one base station BTS7 the location area of which is LA4.

In the following, it is assumed that a subscriber terminal 1 is taken into use for the first time in the system of Figure 2. The WLL subscriber terminal 1 shown in Figure 2 may consist of, for example, a terminal equipment comprising a radio part and a teleadapater, and a user interface connected to the terminal equipment, i.e. a PSTN telephone set, such as a phone, telefax or a computer/modem combination.

When the subscriber terminal is taken into use, the operator first finds out which subscriber network elements serve areas near the future place of location A1 of the subscriber terminal. It can be seen from Figure 2 that only subscriber network element DAX1 serves the future place of location A1 of the subscriber terminal 1. The operator therefore adds the identity of the subscriber terminal in a register 2 of new subscribers of subscriber network element DAX1. The operator also activates a subscriber connection and a subscriber number from the local exchange LE1 for the subscriber terminal 1. Further, the operator reconfigures the V5 interface between the local exchange LE1 and subscriber network element DAX1 to take into account the needs of the new subscriber terminal 1. The operator carries out the aforementioned operations in advance, for example when the subscriber terminal 1 is sold. After these operations the subscriber terminal 1 can be used within the entire area covered by subscriber network element DAX1, which means that the subscriber terminal can freely utilize any one of base stations BTS1 - BTS3 for communication.

After the user of the subscriber terminal 1 has installed the terminal in place and switched it on, the subscriber terminal 1 operates in the same way as a GSM system mobile station, i.e. first it performs measurements on the field strength in order to identify the strongest base station. It stores the measurement results in a memory. After the subscriber terminal 1 has identified the base station with the greatest field strength on the basis of the measurements, i.e. for example base station BTS2, it transmits a location update via this base station to the other parts of the system.

A control unit 4 of the subscriber network element DAX1 comprises detection means, which continuously monitor location updating messages transmitted to the subscriber network element and compare international mobile subscriber identities IMSI contained therein with the identities stored in the register 2 of new subscriber terminals. Therefore the detection means detect that the location updating message originating from the subscriber terminal 1 arrives from a new subscriber terminal. Transmitting means contained in the control unit of subscriber network element DAX1 thereafter transmit to the subscriber terminal 1 a message, for example in a short message, which commands the subscriber terminal 1 to transmit the measurement results stored in its memory. The transmitting means can transmit the message immediately or, alternatively, for example the following night when the network traffic load is low.

When the subscriber terminal 1 receives the command to transmit the measurement results, it retrieves from its memory for example the measurement results of the five strongest base stations, which it then transmits in a short message. The measurement results are forwarded to identification means, which may be placed in subscriber network element DAX1 or, alternatively, for example in the network management system NMS. The identification means identify the base stations with the highest field strength in the place of location A1 of the subscriber terminal 1 on the basis of the measurement results, i.e. base stations BTS2 and BTS3 in Figure 2. The system thereafter determines for the subscriber terminal a home area including at least one of the identified base stations.

The home area of the subscriber terminal can be determined, for example, such that the location area of the base station with the best audibility is selected as the home area. In other words, if base station BTS2 has the best audibility, location area LA1 is selected as the home area of the subscriber terminal 1. The subscriber terminal 1 is then able to utilize also base station BTS1 for communication since the location area of base station BTS1 is also LA1. Alternatively, the home area can be determined on the basis of the base station identity, in which case the subscriber terminal is able to utilize only this particular base station for communication.

When a home area has been determined for the subscriber terminal 1, the network management system deletes the identity of the subscriber terminal from the register 2 of new subscriber terminals of subscriber network element DAX1.

If the place of location of the subscriber terminal 1 is to be changed later, for example to place of location A2, this is carried out similarly as described above. However, in such a case the operator adds the identity of the subscriber terminal in the registers 2 of new subscriber terminals of two different subscriber network elements DAX2 and DAX3, since both subscriber network elements control a base station covering area A2. Correspondingly, a subscriber connection and a temporary number are activated to the local exchange LE2 for the use of the subscriber terminal. The operator also reconfigures the V5 interfaces between the local exchange LE2 and subscriber network elements DAX2 and DAX4 in order to take into account the needs of the new subscriber terminal 1.

When the subscriber terminal has moved to area A2, it transmits a location update forwarded to either subscriber network element DAX2 or DAX3. The subscriber network element which has received the location update, for example subscriber network element DAX2, continues operation as described above in connection with the introduction of a new subscriber terminal (a command to transmit measurement results, and transmission of the measurement results to the identification means). When a home area has been determined for the subscriber terminal, the network management system NMS deletes the unnecessary data from the network, whereafter the subscriber terminal 1 can utilize only the base stations included in its home area. The NMS deletes the data of the subscriber terminal from the registers of new subscriber terminals of subscriber network elements DAX2 and DAX3, and cancels the allocation of the V5 interface between subscriber network element DAX3 and local exchange LE2. The temporary number activated to local exchange LE2 is replaced with the number of the subscriber terminal used in local exchange LE1. The data of the subscriber terminal is simultaneously deleted from subscriber network element DAX1 and from the interface between subscriber network element DAX1 and local exchange LE1.

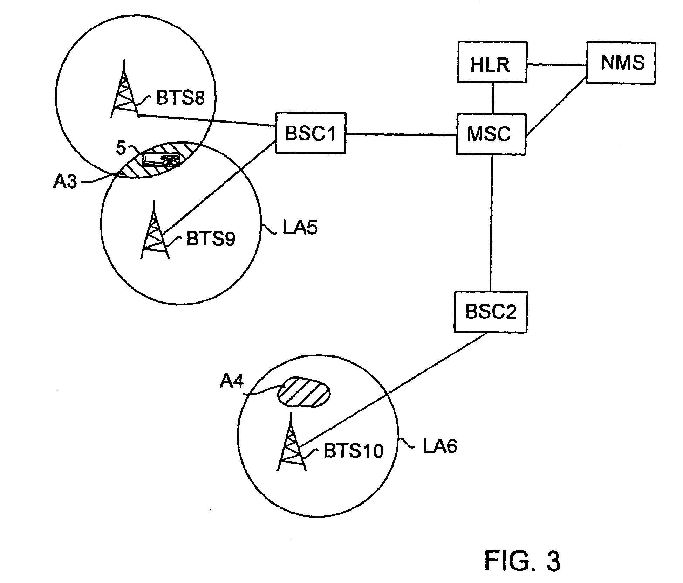

Figure 3 is a block diagram of a second preferred embodiment of the system according to the invention. The embodiment of Figure 3 differs from the embodiment of Figure 2 in that it shows a part of the GSM mobile system which also serves WLL subscribers in addition to conventional GSM mobile stations. In the situation shown in Figure 3, the subscriber network elements consist of base station controllers BSC1 and BSC2 of the GSM system, which control three base stations BTS8 - BTS10.

When a home area is being determined for a subscriber terminal 5 in place of location A3, the operator stores data about the determination of the home area for example in a home location register HLR of the subscriber terminal. When the HLR thereafter receives a location update from the subscriber terminal, it detects that a home area is being determined for the terminal. The system transmits to the subscriber terminal a short message containing a command to transmit measurement results. The results transmitted by the subscriber terminal 5 are forwarded to the network management system NMS. The NMS thereafter identifies the strongest base stations from the measurement results and determines a home area for the subscriber terminal 5 on the basis thereof. The data about the home area can be stored, for example, in the home location register HLR in connection with other subscriber data.

In the system of Figure 3, the same subscriber terminal 5 can be assigned a home area which consists of radio cells that are spaced apart and belong to different location areas. If the home of the user of the subscriber terminal 5 is situated for example in area A3 and for example his vacation home in area A4, it can be determined in the home location register HLR that the home area of the subscriber terminal 5 consists of location areas LA5 and LA6. The subscriber terminal is thus able to utilize all the base stations in location areas LA5 and LA6. Since the home area is stored in the home location register HLR of the subscriber in connection with the other subscriber data, the information about the home area is also transmitted between different networks together with the rest of the subscriber data, for example to a visitor location register of another mobile services switching centre. Therefore the home area of the subscriber terminal 5 can also consist of radio cells situated within areas of different mobile services switching centres.

For example, if location area LA5 has already been determined as the home area of the subscriber terminal 5 and the home area should be expanded such that the terminal also operates in area A4, this can be implemented for instance in such a way that the home location register HLR is programmed to wait for a location update which is transmitted via the base station controller BSC2, whereafter the home location register activates the determination of the home area as described above. However, in such a case the home area is not restricted only to the location area LA6 of the strongest base station BTS10, but also the old home area can still be used such that the new home area consists of location areas LA5 and LA6.

It should be understood that the above description and the related drawings are only intended to illustrate the present invention. Different variations and modifications of the invention will be obvious to those skilled in the art without departing from the scope of the invention disclosed in the appended claims.

## Claims

1. A method of determining a home area for a subscriber terminal in a radio system where the subscriber terminal comprises measuring means for measuring the strengths of signals it has received from different base stations and for storing the measurement results in a memory, the method comprising a step of
receiving a location updating message from the subscriber terminal, **characterized in that** the method comprises steps of
transmitting, after the location updating message has been received, a command to the subscriber terminal to transmit the measurement results it has stored in the memory,
receiving the measurement results from the subscriber terminal,
identifying the base stations with the greatest signal strengths on the basis of the measurement results, and
determining the home area of the subscriber terminal such that it includes at least one of the identified base stations.

2. A method according to claim 1, **characterized by** preventing the subscriber terminal from setting up communication links via other base stations than those which belong to its home area after a home area has been determined for the subscriber terminal.

3. A method according to claim 1 or 2, **characterized in that** said subscriber terminal is a new subscriber terminal, the method also comprising steps of
adding the identity of the subscriber terminal to a register of new subscribers of at least one subscriber network element, and
providing said subscriber terminal with free mobility for the duration of the determination of the home area, such that the subscriber terminal operates within an area covered by the subscriber network elements which have the identity of said subscriber terminal in their register of new subscribers.

4. A method according to claim 1 or 2, **characterized in that** a home area has been previously determined for said subscriber terminal, and the home area is changed by means of steps of
adding the identity of the subscriber terminal to the register of new subscribers of at least one subscriber network element in the system,
providing said subscriber terminal with free mobility for the duration of the determination of the home area, such that the terminal operates not only in the previously determined home area but also in an area that is covered by the subscriber network elements which have the identity of said subscriber terminal in their register of new subscribers, and
waiting for a location updating message to be forwarded from the subscriber terminal via a subscriber network element which has the identity of said subscriber terminal in its register of new subscribers.

5. A wireless local loop radio system comprising
subscriber terminals (1, 5) comprising measuring means for measuring the strengths of signals they have received from different base stations (BTS1 - BTS10) and for storing the measurement results in a memory, and transmitting means for transmitting location updates to other parts of the system, and
a subscriber network element (DAX1-DAX3, BSC1, BSC2) arranged to communicate with an exchange (LE1, LE2, MSC) and which comprises means for transmitting telecommunication signals between the subscriber terminals and the exchange via the base stations, **characterized in that** the system comprises
detection means (4, HLR) for detecting a location updating message transmitted by a particular subscriber terminal,
transmitting means (4, HLR) for transmitting a command to said particular subscriber terminal to transmit the measurement results stored in the memory of the subscriber terminal after the detection means have detected a location updating message transmitted by said subscriber terminal,
receiving means for receiving the measurement results transmitted by said subscriber terminal,
identification means (4, NMS) for identifying the base stations with the strongest signals on the basis of the measurement results received from the subscriber terminal, and
means (4, NMS), responsive to the identification means, for determining a home area for said subscriber terminal such that said home area includes at least one of the identified base stations.

6. A radio system according to claim 5, **characterized in**
**that** said subscriber network element (DAX1 - DAX3) is arranged to communicate with a local exchange (LE1, LE2) of the public switched telephone network in order to transmit telecommunication signals between the subscriber terminals (1) and the local exchange (LE1, LE2) via the base stations (BTS1 - BTS7), and that it is provided with a register (2) of new subscriber terminals, and
**that** the detection means (4) is arranged to detect location updating messages transmitted by a subscriber terminal (1) the identity of which is stored in the register (2) of new subscriber terminals.

7. A radio system according to claim 5, **characterized in that** said subscriber network element consists of a base station controller (BSC1, BSC2) of the cellular radio system, which is arranged to communicate with a mobile services switching centre (MSC) in order to transmit telecommunication signals between the subscriber terminals and the mobile services switching centre via the base stations (BTS8 - BTS10).

8. A subscriber network element (DAX1 - DAX3) comprising
means for setting up a communication link to an exchange (LE1, LE2, MSC) for transmitting telecommunication signals between subscriber terminals (1, 5) and the exchange, and
a register (2) of new subscriber terminals, which is arranged to store the identities of the new subscriber terminals, **characterized in that** the subscriber network element comprises
detection means (4) for detecting a location updating message containing the subscriber identity stored in the register (2) of new subscriber terminals,
transmitting means (4) which, after said detection of the location updating message, is arranged to transmit to the subscriber terminal which transmitted the location updating message a command to transmit the measurement results stored in a memory means of the subscriber terminal to the subscriber network element,
receiving means (4) for receiving the measurement results transmitted by said subscriber terminal,
identification means (4) for identifying the base stations with the strongest signals on the basis of the measurement results received from the subscriber terminal, and
means (4), responsive to the identification means, for determining a home area for said subscriber terminal such that said home area includes at least one of the identified base stations.

9. A subscriber terminal (1, 5) of a radio system, comprising
transceiver means for setting up a communication link via the radio path to other parts of the system,
measuring means for measuring the strengths of signals received from different base stations (BTS1 - BTS10) and for storing them in a memory, and
means for transmitting a location updating message to the other parts of the system, **characterized in that**
the transceiver means are arranged to transmit the measurement results stored in the memory means to the other parts of the system in response to a predetermined command received by the subscriber terminal.

10. A subscriber terminal according to claim 9, **characterized in that** the transmitting means are arranged to transmit said measurement results in a short message to the other parts of the system.

## Patentansprüche

1. Verfahren zur Bestimmung eines Heimatgebiets für ein Teilnehmerendgerät in einem Funksystem, wobei das Teilnehmerendgerät ein Messmittel zum Messen der Stärken von Signalen, die es von verschiedenen Basisstationen empfangen hat, und zum Speichern der Messergebnisse in einem Speicher umfasst, wobei das Verfahren einen Schritt des
Empfangens einer Standortaktualisierungsnachricht vom Teilnehmerendgerät umfasst, **dadurch gekennzeichnet, dass** das Verfahren die folgenden Schritte umfasst:
Senden, nach dem Empfang der Standortaktualisierungsnachricht, eines Befehls zum Teilnehmerendgerät, damit dieses die Messergebnisse, die es im Speicher gespeichert hat, sendet, Empfangen der Messergebnisse vom Teilnehmerendgerät, Identifizieren der Basisstationen mit den größten Signalstärken auf Basis der Messergebnisse, und derartiges Bestimmen des Heimatgebiets des Teilnehmerendgeräts, dass dieses zumindest eine der identifizierten Basisstationen beinhaltet.

2. Verfahren nach Anspruch 1, **dadurch gekennzeichnet, dass** das Teilnehmerendgerät daran gehindert wird, Kommunikationsverbindungen über andere Basisstationen als jene, die zu seinem Heimatgebiet gehören, herzustellen, nachdem für das Teilnehmerendgerät ein Heimatgebiet bestimmt wurde.

3. Verfahren nach Anspruch 1 oder 2, **dadurch gekennzeichnet, dass** das Teilnehmerendgerät ein neues Teilnehmerendgerät ist, wobei das Verfahren auch die folgenden Schritte umfasst:
Hinzufügen der Identität des Teilnehmerendgeräts zu einem Register neuer Teilnehmer von zumindest einem Teilnehmernetzelement, und
Versehen des Teilnehmerendgeräts für die Dauer der Bestimmung des Heimatgebiets mit freier Mobilität, damit das Teilnehmerendgerät in einem Gebiet, das durch die Teilnehmernetzelemente, die die Identität des Teilnehmerendgeräts in ihrem Register neuer Teilnehmer aufweisen, abgedeckt wird, tätig ist.

4. Verfahren nach Anspruch 1 oder 2, **dadurch gekennzeichnet, dass** für das Teilnehmerendgerät vorher ein Heimatgebiet bestimmt wurde und das Heimatgebiet durch die folgenden Schritte geändert wird:
Hinzufügen der Identität des Teilnehmerendgeräts zum Register neuer Teilnehmer von zumindest einem Teilnehmernetzelement im System,
Versehen des Teilnehmerendgeräts für die Dauer der Bestimmung des Heimatgebiets mit freier Mobilität, damit das Teilnehmerendgerät nicht nur im vorher bestimmten Heimatgebiet, sondern auch in einem Gebiet, das durch die Teilnehmernetzelemente, die die Identität des Teilnehmerendgeräts in ihrem Register neuer Teilnehmer aufweisen, abgedeckt wird, tätig ist, und
Warten, dass vom Teilnehmerendgerät eine Standortaktualisierungsnachricht über ein Teilnehmernetzelement, das die Identität des Teilnehmerendgeräts in seinem Register neuer Teilnehmer aufweist, übermittelt wird.

5. Drahtloses lokales Schleifenfunksystem, umfassend Teilnehmerendgeräte (1, 5), die ein Messmittel zum Messen der Stärken von Signalen, die sie von verschiedenen Basisstationen (BTS1 bis BTS10) empfangen haben, und zum Speichern der Messergebnisse in einem Speicher, und ein Sendemittel zum Senden von Standortaktualisierungen zu anderen Teilen des Systems umfassen, und ein Teilnehmernetzelement (DAX1 bis DAX3, BSC1, BSC2), das dazu eingerichtet ist, mit einer Vermittlung (LE1, LE2, MSC) zu kommunizieren, und das ein Mittel zum Senden von Telekommunikationssignalen über die Basisstationen zwischen den Teilnehmerendgeräten und der Vermittlung umfasst, **dadurch gekennzeichnet, dass** das System Folgendes umfasst:
ein Feststellmittel (4, HLR), um eine Standortaktualisierungsnachricht, die von einem bestimmten Teilnehmerendgerät gesendet wird, festzustellen,
ein Sendemittel (4, HLR), um einen Befehl zu diesem bestimmten Teilnehmerendgerät zu senden, damit dieses die Messergebnisse, die im Speicher des Teilnehmerendgeräts gespeichert sind, sendet, nachdem das Feststellmittel eine Standortaktualisierungsnachricht, die durch das Teilnehmerendgerät gesendet wird, festgestellt hat, ein Empfangsmittel, um die Messergebnisse, die durch das Teilnehmerendgerät gesendet werden, zu empfangen,
ein Identifikationsmittel (4, NMS), um auf Basis der Messergebnisse, die vom Teilnehmerendgerät empfangen werden, die Basisstationen mit den stärksten Signalen zu identifizieren, und
ein Mittel (4, NMS), das auf das Identifikationsmittel anspricht, um für das Teilnehmerendgerät ein Heimatgebiet derart zu bestimmen, dass das Heimatgebiet zumindest eine der identifizierten Basisstationen beinhaltet.

6. Funksystem nach Anspruch 5, **dadurch gekennzeichnet, dass** das Teilnehmernetzelement (DAX1 bis DAX3) dazu eingerichtet ist, mit einer lokalen Vermittlung (LE1, LE2) des öffentlichen Telefonwählnetzes zu kommunizieren, um Telekommunikationssignale über die Basisstationen (BTS1 bis BTS7) zwischen den Teilnehmerendgeräten (1) und der lokalen Vermittlung (LE1, LE2) zu kommunizieren, und dass es mit einem Register (2) neuer Teilnehmerendgeräte versehen ist, und
dass das Feststellmittel (4) dazu eingerichtet ist, Standortaktualisierungsnachrichten, die durch ein Teilnehmerendgerät (1) gesendet werden, dessen Identität im Register (2) neuer Teilnehmerendgeräte gespeichert ist, festzustellen.

7. Funksystem nach Anspruch 5, **dadurch gekennzeichnet, dass** das Teilnehmernetzelement aus einer Basisstationssteuerung (BSC1, BSC2) des Zellularfunksystems besteht, die dazu eingerichtet ist, mit einer Mobilfunkvermittlungsstelle zu kommunizieren, um Telekommunikationssignale über die Basisstationen (BTS8 bis BTS10) zwischen den Teilnehmerendgeräten und der Mobilfunkvermittlungsstelle zu senden.

8. Teilnehmernetzelement (DAX1 bis DAX3), umfassend ein Mittel, um eine Kommunikationsverbindung mit einer Vermittlung (LE1, LE2, MSC) herzustellen, um Telekommunikationssignale zwischen Teilnehmerendgeräten (1, 5) und der Vermittlung zu senden, und
ein Register (2) neuer Teilnehmerendgeräte, das dazu eingerichtet ist, die Identitäten der neuen Teilnehmerendgeräte zu speichern, **dadurch gekennzeichnet, dass** das Teilnehmernetzelement Folgendes umfasst:
ein Feststellmittel (4), um eine Standortaktualisierungsnachricht festzustellen, die die Teilnehmeridentität, die im Register (2) neuer Teilnehmerendgeräte gespeichert ist, enthält,
ein Sendemittel (4), das nach der Feststellung der Standortaktualisierungsnachricht dazu eingerichtet ist, einen Befehl zum Teilnehmerendgerät, das die Standortaktualisierungsnachricht gesendet hat, zu senden, damit dieses die Messergebnisse, die in einem Speichermittel des Teilnehmerendgeräts gespeichert sind, zum Teilnehmernetzelement sendet, ein Empfangsmittel (4), um die Messergebnisse, die durch das Teilnehmerendgerät gesendet werden, zu empfangen,
ein Identifikationsmittel (4), um auf Basis der Messergebnisse, die vom Teilnehmerendgerät empfangen werden, die Basisstationen mit den stärksten Signalen zu identifizieren, und
ein Mittel (4), das auf das Identifikationsmittel anspricht, um für das Teilnehmerendgerät ein Heimatgebiet derart zu bestimmen, dass das Heimatgebiet zumindest eine der identifizierten Basisstationen beinhaltet.

9. Teilnehmerendgerät (1, 5) eines Funksystems, Umfassend
ein Sender-Empfänger-Mittel, um über den Funkweg eine Kommunikationsverbindung mit anderen Teilen des Systems herzustellen,
ein Messmittel, um die Stärken von Signalen, die von verschiedenen Basisstationen (BTS1 bis BTS10) empfangen werden, zu messen und sie in einem Speicher zu speichern, und
ein Mittel, um eine Standortaktualisierungsnachricht zu den anderen Teilen des Systems zu senden, **dadurch gekennzeichnet, dass**
das Sender-Empfänger-Mittel dazu eingerichtet ist, die Messergebnisse, die im Speichermittel gespeichert sind, als Reaktion auf einen vorbestimmten Befehl, der durch das Teilnehmerendgerät empfangen wird, zu den anderen Teilen des Systems zu senden.

10. Teilnehmerendgerät nach Anspruch 9, **dadurch gekennzeichnet, dass** das Sendemittel dazu eingerichtet ist, die Messergebnisse in einer Kurznachricht zu den anderen Teilen des Systems zu senden.

## Revendications

1. Procédé de détermination d'une zone nominale pour un terminal d'abonné dans un système radio où le terminal d'abonné comprend des moyens de mesure pour mesurer les intensités de signaux qu'il reçoit de différentes stations de base et pour mémoriser les résultats de mesure dans une mémoire, le procédé comprenant une étape consistant à :
recevoir un message de mise à jour d'emplacement du terminal d'abonné, **caractérisé en ce que** le procédé comprend les étapes consistant à :
émettre, après la réception du message de mise à jour d'emplacement, vers le terminal d'abonné, une commande de transmission des résultats de mesure qu'il a mémorisé dans la mémoire,
recevoir les résultats de mesure du terminal d'abonné,
identifier les stations de base avec les intensités de signaux les plus grandes sur la base des résultats de mesure, et
déterminer la zone nominale du terminal d'abonné de sorte qu'elle contienne au moins l'une des stations de base identifiées.

2. Procédé selon la revendication 1, **caractérisé en ce que** le terminal d'abonné ne peut pas établir des liaisons de communication par l'intermédiaire de stations de base autres que celles qui appartiennent à sa zone nominale après qu'une zone nominale ait été déterminée pour le terminal d'abonné.

3. Procédé selon la revendication 1 ou 2, **caractérisé en ce que** ledit terminal d'abonné est un nouveau terminal d'abonné, le procédé comprenant également les étapes consistant à :
ajouter l'identité du terminal d'abonné à un registre de nouveaux abonnés d'au moins un élément de réseau d'abonnés, et
fournir audit terminal d'abonné une mobilité libre pendant la durée de la détermination de la zone nominale, de sorte que le terminal d'abonné fonctionne dans une zone couverte par les éléments de réseau d'abonnés qui ont l'identité dudit terminal d'abonné dans leur registre de nouveaux abonnés.

4. Procédé selon la revendication 1 ou 2, **caractérisé en ce qu'**une zone nominale a été déterminée au préalable pour ledit terminal d'abonné, et la zone nominale est modifiée au moyen des étapes consistant à :
ajouter l'identité du terminal d'abonné au registre de nouveaux abonnés d'au moins un élément de réseau d'abonnés dans le système,
fournir audit terminal d'abonné une mobilité libre pendant la durée de la détermination de la zone nominale, de sorte que le terminal d'abonné fonctionne non seulement dans la zone nominale déterminée au préalable, mais également dans une zone qui est couverte par les éléments de réseau d'abonnés qui ont l'identité dudit terminal d'abonné dans leur registre de nouveaux abonnés, et
attendre qu'un message de mise à jour d'emplacement soit acheminé à partir du terminal d'abonné par l'intermédiaire d'un élément de réseau d'abonnés qui a l'identité dudit terminal d'abonné dans son registre de nouveaux abonnés.

5. Système radio à boucle locale sans fil comprenant :
des terminaux d'abonnés (1, 5) comprenant des moyens de mesure pour mesurer les intensités de signaux qu'ils ont reçus de différentes stations de base (BTS1 à BTS10) et pour mémoriser les résultats de mesure dans une mémoire, et des moyens de transmission pour transmettre des mises à jour d'emplacement à d'autres parties du système, et
un élément de réseau d'abonnés (DAX1 à DAX3, BSC1, BSC2) agencé pour communiquer avec un central (LE1, LE2, MSC) et qui comprend des moyens pour transmettre des signaux de télécommunication entre les terminaux d'abonnés et le central par l'intermédiaire des stations de base, **caractérisé en ce que** le système comprend :
des moyens de détection (4, HLR) pour détecter un message de mise à jour d'emplacement transmis par un terminal d'abonné particulier,
des moyens de transmission (4, HLR) pour transmettre, audit terminal d'abonné particulier, une commande de transmission des résultats de mesure mémorisés dans la mémoire du terminal d'abonné après que les moyens de détection aient détectés un message de mise à jour d'emplacement transmis par ledit terminal d'abonné,
des moyens de réception pour recevoir les résultats de mesure transmis par ledit terminal d'abonné,
des moyens d'identification (4, NMS) pour identifier les stations de base avec les signaux les plus intenses sur la base des résultats de mesure reçus du terminal d'abonné, et
des moyens (4, NMS), sensibles aux moyens d'identification, pour déterminer une zone nominale pour ledit terminal d'abonné de sorte que ladite zone nominale comprenne au moins l'une des stations de base identifiées.

6. Système radio selon la revendication 5, **caractérisé en ce que** :
ledit élément de réseau d'abonnés (DAX1 à DAX3) est agencé pour communiquer avec un central local (LE1, LE2) du réseau téléphonique public commuté afin de transmettre des signaux de télécommunication entre les terminaux d'abonnés (1) et le central local (LE1, LE2) par l'intermédiaire des stations de base (BTS1 à BTS7), et **en ce qu'**il est pourvu d'un registre (2) de nouveaux terminaux d'abonnés, et
**en ce que** les moyens de détection (4) sont agencés pour détecter des messages de mise à jour d'emplacement transmis par un terminal d'abonné (1) dont l'identité est mémorisée dans le registre (2) de nouveaux terminaux d'abonnés.

7. Système radio selon la revendication 5, **caractérisé en ce que** ledit élément de réseau d'abonnés consiste en un contrôleur de stations de base (BSC1, BSC2) du système radio cellulaire, qui est agencé pour communiquer avec un centre de commutation du service mobile (MSC) afin de transmettre des signaux de télécommunication entre les terminaux d'abonnés et le centre de commutation du service mobile par l'intermédiaire des stations de base (BTS8 à BTS10).

8. Elément de réseau d'abonnés (DAX1 à DAX3) comprenant :
des moyens pour établir une liaison de communication vers un central (LE1, LE2, MSC) pour transmettre des signaux de télécommunication entre des terminaux d'abonnés (1, 5) et le central, et
un registre (2) de nouveaux terminaux d'abonnés, qui est agencé pour mémoriser les identités des nouveaux terminaux d'abonnés, **caractérisé en ce que** l'élément de réseau d'abonnés comprend :
des moyens de détection (4) pour détecter un message de mise à jour d'emplacement contenant l'identité d'abonné mémorisée dans le registre (2) de nouveaux terminaux d'abonnés,
des moyens de transmission (4) qui, après ladite détection du message de mise à jour d'emplacement, sont agencés pour transmettre, au terminal d'abonné qui a transmis le message de mise à jour d'emplacement, une commande de transmission des résultats de mesure mémorisés dans des moyens formant mémoire du terminal d'abonné à l'élément de réseau d'abonné,
des moyens de réception (4) pour recevoir les résultats de mesure transmis par ledit terminal d'abonné,
des moyens d'identification (4) pour identifier les stations de base avec les signaux les plus intenses sur la base des résultats de mesure reçus du terminal d'abonné, et
des moyens (4), sensibles aux moyens d'identification, pour déterminer une zone nominale pour ledit terminal d'abonné de sorte que ladite zone nominale comprenne au moins l'une des stations de base identifiées.

9. Terminal d'abonné (1, 5) d'un système radio, comprenant :
des moyens formant émetteur-récepteur pour établir une liaison de communication par l'intermédiaire du trajet radio vers d'autres parties du système,
des moyens de mesure pour mesurer les intensités de signaux reçus de différentes stations de base (BTS1 à BTS10) et pour les mémoriser dans une mémoire, et
des moyens pour transmettre un message de mise à jour d'emplacement aux autres parties du système, **caractérisé en ce que** :
les moyens formant émetteur-récepteur sont agencés pour transmettre les résultats de mesure mémorisés dans les moyens formant mémoire aux autres parties du système en réponse à une commande prédéterminée reçue par le terminal d'abonné.

10. Terminal d'abonné selon la revendication 9, **caractérisé en ce que** les moyens de transmission sont agencés pour transmettre lesdits résultats de mesure dans un message court aux autres parties du système.
